# FASCICULE DE BREVET EUROPEEN

(11) **EP 4 344 182 B1**
(45) Date de publication et mention de la délivrance du brevet: **29.04.2026**
(21) Numéro de dépôt: 23195148.4
(22) Date de dépôt: 04.09.2023
(51) Int. Cl.: H04M 11/02, H04M 1/02, H04N 7/18

(54) **SYSTÈME DE CONTRÔLE D`ACCÈS**
ZUGANGSKONTROLLSYSTEM
ACCESS CONTROL SYSTEM

(30) Priorité: 21.09.2022 FR 2209531
(43) Date de publication de la demande: 27.03.2024
(73) Titulaire: Cogelec, 85290 Mortagne-sur-Sèvre (FR)
(72) Inventeur: LECLERC, Roger, 85130 LES LANDES GENUSSON (FR)
(74) Mandataire: INNOV-GROUP

(56) Documents cités:
- EP-A1- 3 886 420
- EP-A1- 3 907 709
- AU-A4- 2020 102 216
- DE-A1- 102005 033 898

## Description

L'invention concerne un système de contrôle d'accès apte à contrôler l'accès à une résidence comportant plusieurs appartements et un bandeau électronique de porte pour ce système de contrôle d'accès.

Des systèmes connus de contrôle d'accès comportent :
- pour chaque appartement de la résidence, une porte d'appartement située à l'entrée de cet appartement,
- une porte de résidence située à l'entrée de la résidence pour autoriser et, en alternance, interdir l'accès à l'intérieur de la résidence.

Typiquement, la porte de résidence comporte une serrure électrique commandable par un portier électrique accessible depuis l'extérieur de la résidence. Ce portier électrique permet d'établir une conversation audiophonique avec un résident d'un des appartements. A cet effet, chaque appartement est équipé d'un équipement intérieur d'interphonie comportant au moins :
- un microphone et un haut-parleur pour discuter avec le visiteur présent devant le portier électrique, et
- un bouton d'ouverture apte à être actionné par le résident situé à l'intérieur de cet appartement pour déverrouiller la serrure électrique de la porte de résidence.

Classiquement, dans de tels systèmes connus de contrôle d'accès, lorsqu'un résident souhaite autoriser une visiteur à entrer, il doit d'abord déverrouiller la serrure de la porte de résidence en utilisant son équipement intérieur d'interphonie puis déverrouiller sa porte d'appartement.

Un tel système de contrôle d'accès est par exemple divulgué dans la demande DE102005033898A1. De plus, dans cette demande, au moins l'une des portes d'appartement est aussi équipée d'une serrure électrique et d'un bouton d'ouverture pour déverrouiller cette serrure électrique.

Le système divulgué dans la demande DE102005033898A1 est intéressant car il permet d'ouvrir à distance à la fois la porte de résidence et la porte d'appartement. Pour cela, une unité de commande de la serrure électrique de la porte d'appartement est interfacée avec l'équipement intérieur d'interphonie situé dans l'appartement.

Toutefois, cette unité de commande ne peut être utilisée qu'à distance par un centre d'appel et ne peut pas être utilisée par un résident présent à l'intérieur de son appartement.

Par ailleurs, l'unité de commande est logée dans le boîtier de la serrure électrique de la porte d'appartement. A l'inverse, l'équipement intérieur d'interphonie est logé ailleurs dans l'appartement. Ainsi, lors de l'installation de cette serrure électrique sur la porte d'appartement, il faut l'interfacer avec un équipement intérieur d'interphonie qui se trouve ailleurs dans l'appartement. Ceci n'est pas toujours simple car l'emplacement où se trouve l'équipement intérieur d'interphonie peut être éloigné de la porte d'appartement.

De l'état de la technique est également connu de EP3886420A1, EP3907709A1, US2004/177072A1, EP3147872A1 et AU2020102216A4.

L'invention vise donc à proposer un système de contrôle d'accès qui permet à un résident situé à l'intérieur de son appartement de déverrouiller à la fois la porte de résidence et sa porte d'appartement et qui soit plus simple à installer.

Elle a donc pour objet un système de contrôle d'accès conforme à la revendication 1.

Elle a également pour objet un bandeau électronique de porte pour la réalisation de ce système de contrôle d'accès.

L'invention sera mieux comprise à la lecture de la description qui va suivre, donnée uniquement au titre d'exemple non limitatif et faite en se référant aux dessins sur lesquels :
- la figure 1 est une illustration schématique d'une résidence équipée d'un système de contrôle d'accès,
- la figure 2 est une illustration schématique, en perspective, d'un bandeau électronique de porte du système de contrôle d'accès de la figure 1 ;
- la figure 3 est une illustration schématique des composants du bandeau électronique de porte de la figure 2 ;
- la figure 4 est un organigramme d'un procédé de fonctionnement du système de contrôle d'accès de la figure 1.

Dans la suite de cette description, les caractéristiques et fonctions bien connues de l'homme du métier ne sont pas décrites en détail. Dans ces figures, les mêmes références sont utilisées pour désigner les mêmes éléments.

Dans cette description, des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont introduits dans un chapitre III.

### CHAPITRE I : EXEMPLES DE MODES DE RÉALISATION

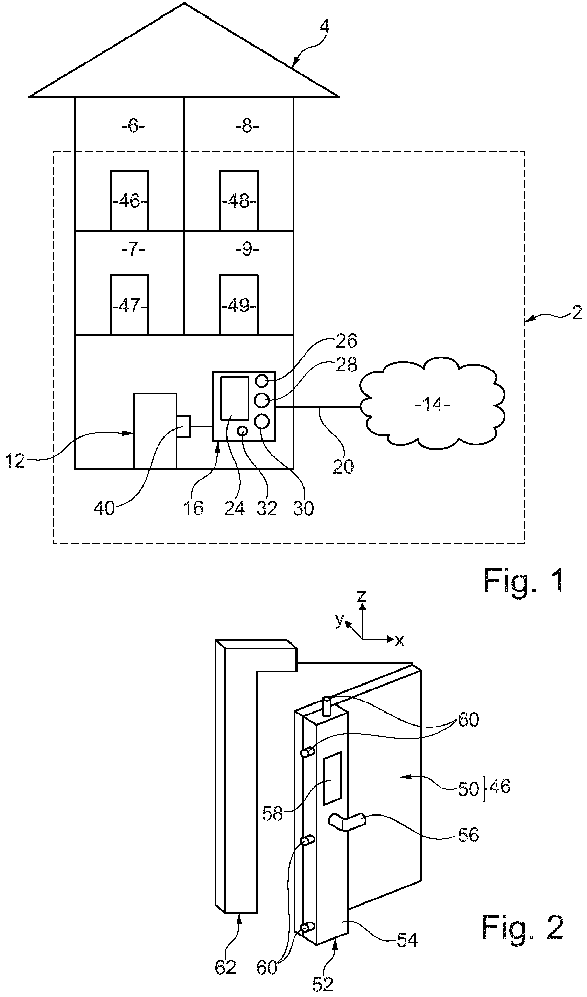

La figure 1 représente un système 2 de contrôle d'accès à une résidence 4. Typiquement, la résidence 4 est un habitat collectif comportant plusieurs appartements ou logements. Par exemple, la résidence 4 comporte au moins quatre appartements 6, 7, 8 et 9.

Le système 2 permet d'autoriser et, en alternance, d'interdire l'accès à la résidence 4 à un visiteur. De plus, le système 2 permet également d'autoriser et, en alternance, d'interdire l'accès aux appartements de la résidence 4.

A cet effet, le système 2 comporte une porte de résidence 12 qui permet de contrôler l'accès à l'intérieur de la résidence 4 à l'aide d'un interphone.

La porte 12 est déplaçable entre une position fermée et une position ouverte. Dans sa position fermée, elle interdit l'accès à l'intérieur de la résidence 4. Dans sa position ouverte, elle autorise l'accès à l'intérieur de la résidence 4. La porte 12 doit donc être franchie avant de pouvoir atteindre un des appartements de cette résidence 4.

L'interphone comporte :
- un équipement intérieur d'interphonie logé à l'intérieur de chaque appartement,
- une platine 16 de rue située à proximité de la porte 12, et
- un réseau 14 de transmission d'informations qui raccorde la platine 16 à chacun des équipements intérieurs d'interphonie.

Typiquement, la platine 16 est située à moins de 10 m et, le plus souvent, à moins de 5 m ou 3 m de la porte 12. La platine 16 est accessible depuis l'extérieur de la résidence 4. Typiquement, la platine 16 est encastrée dans un mur vertical de la résidence 4. Elle comporte une face avant directement exposée à l'extérieur de la résidence et conçue pour résister aux actes de vandalisme. Par exemple la face avant est une plaque en acier inoxydable de plusieurs millimètres d'épaisseur.

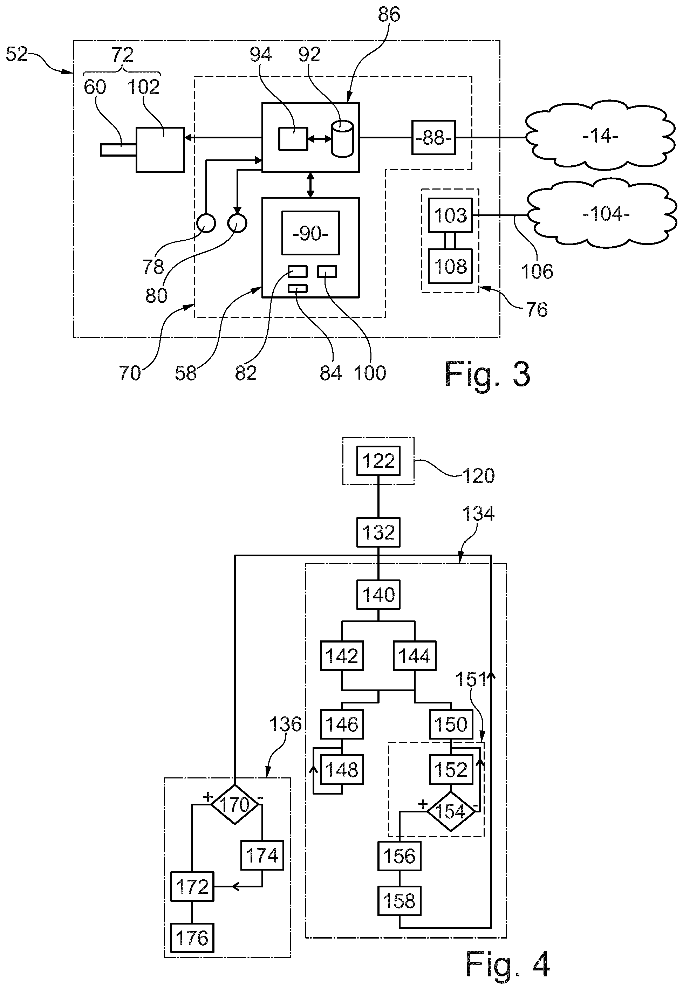

Ici, il y a autant d'équipements intérieurs d'interphonie que d'appartements dans la résidence 4. Toutefois, pour simplifier la figure 1, les équipements intérieurs d'interphonie ne sont pas représentés sur cette figure. Un exemple de réalisation d'un tel équipement intérieur d'interphonie est décrit en détail en référence aux figures 2 et 3.

Le réseau 14 peut être tout type de réseau qui permet d'échanger des informations avec la platine 16 depuis n'importe lequel des équipements intérieur d'interphonie. Il peut s'agir d'un réseau filaire ou sans-fil. Il peut aussi s'agir d'un réseau privée ou d'un réseau public comme un réseau téléphonique public. Ici, le réseau 14 a été représenté, à titre indicatif seulement, comme étant à l'extérieur de la résidence 4. Toutefois, lorsque le réseau 14 est un réseau privé, il est essentiellement situé à l'intérieur de la résidence 4.

La platine 16 permet à un visiteur présent devant cette platine d'établir une conversation audiophonique avec le résident appelé. A cet effet, la platine 16 est raccordée au réseau 14 par l'intermédiaire d'une liaison 22 de transmission d'informations. Cette liaison 22 peut être une liaison filaire ou une liaison sans-fil.

La platine 16 est équipée :
- d'une interface homme-machine 24,
- d'un haut-parleur 26,
- d'un microphone 28,
- d'une caméra 30 apte à filmer un visiteur présent devant cette platine de rue, et
- d'un lecteur 32 de badges permettant d'autoriser et, en alternance, d'interdire l'accès à la résidence 4 en fonction d'informations contenues dans un badge présenté devant ce lecteur.

L'interface 24 permet de sélectionner puis d'appeler l'un quelconque des équipements intérieurs d'interphonie de la résidence 4. Par exemple, à cet effet, l'interface 24 comporte :
- un écran,
- des touches de navigation permettant de faire défiler sur l'écran des identifiants d'appartements et d'en sélectionner un, et
- une touche d'appel permettant de déclencher un appel vers équipement intérieur d'interphonie de l'appartement correspondant à l'identifiant sélectionné.

Typiquement, l'identifiant d'appartement est le nom du résident vivant dans cet appartement.

Le système 2 comprend également une serrure électrique 40 déplaçable, en réponse à une commande de déverrouillage, entre un état verrouillé et un état déverrouillé. Dans l'état verrouillé, la serrure 40 verrouille la porte 12 dans sa position fermée. Dans l'état déverrouillé, elle autorise le déplacement de la porte 12 depuis sa position fermée vers sa position ouverte. A cet effet, la serrure 40 est mécaniquement associée à la porte 12. Par exemple, ici, la serrure 40 est fixée sur le dormant de la porte 12 et coopère avec un élément de la porte 12 pour la verrouiller dans sa position fermée. A titre d'illustration, la serrure 12 est une gâche électrique, par exemple, à ventouse.

Dans cet exemple de réalisation, c'est la platine 16 qui transmet la commande de déverrouillage à la serrure 40. Plus précisément, la platine 16 transmet une commande de déverrouillage à la serrure 40 dans les deux cas suivants :
- en réponse à la réception d'une commande de déverrouillage de la serrure 40 transmise à la platine 16 par l'un quelconque des équipements intérieurs d'interphonie de la résidence 4, et
- en réponse à la présentation d'un badge autorisé à déverrouiller la serrure 40 devant le lecteur 32.

Ainsi, dans ce mode de réalisation, la platine 16 remplit en plus les fonctions de portier électrique.

L'ensemble des composants électroniques qui constituent l'interface 24, le haut-parleur 26, le microphone 28 et la caméra 30 sont situés derrière la face avant de la platine 16 et logés à l'intérieur d'une niche creusée dans l'épaisseur du mur de la résidence 4.

En plus des composants déjà présentés, la platine 16 comprend également, logé à l'intérieur de la niche :
- un émetteur-récepteur permettant de raccorder la platine 16 au réseau 14,
- un calculateur électronique programmé pour commander les différents équipements de la platine 16 et mettre en œuvre le procédé de la figure 4.

Le système 2 comporte aussi, pour chaque appartement, une porte d'appartement située à l'entrée de cet appartement. Sur la figure 1, les portes d'appartements des appartements 6 à 9, portent, respectivement, les références numériques 46 à 49. Chacune de ces portes 46 à 49 est déplaçable entre une position fermée et une position ouverte. Dans la position fermée, elle interdit l'accès à l'intérieur de l'appartement. Dans la position ouverte, elle autorise l'accès à l'intérieur de cet appartement.

Enfin, dans cet exemple de réalisation, le système 2 comporte également, pour chaque appartement, un bandeau électronique de porte. Ici, les bandeaux électroniques de porte installés dans chaque appartement sont structurellement identiques. Ainsi, seul le bandeau électronique de porte de l'appartement 6 est maintenant décrit en détail.

La figure 2 représente la porte 46 de l'appartement 6. La porte 46 comporte une face intérieure 50 tournée vers l'intérieur de l'appartement 6.

Pour verrouiller la porte 46 dans sa position fermée, un bandeau électronique 52 de porte est fixé, sans aucun degré de liberté, sur la face intérieure 50. Ici, le bandeau 52 est un bandeau de porte multipoints.

Ce bandeau 52 se présente sous la forme d'une seule pièce à l'intérieure de laquelle sont logés les différents composants décrits en référence à la figure 3. A cet effet, le bandeau 52 se présente sous la forme d'un boîtier rigide 54 à l'intérieur duquel sont fixés ses différents composants. Le boîtier 54 est ici fixé le long de la tranche verticale de la porte 46 située du côté opposé aux gonds. Par exemple, le boîtier 54 est fixé sur la face intérieure 50 à l'aide de vis. Ainsi, avantageusement, la boîtier 54 peut être monté sur une porte pré-existante et, si nécessaire, le boîtier 54 peut être retiré de la face intérieure 50 de la porte 46.

Sur la figure 2, seules sont visibles les composants du bandeau 52 qui dépassent du boîtier 54 ou traverse ce boîtier 54. Ainsi, seuls les composants suivants du bandeau 52 sont visibles sur la figure 2 :
- une poignée 56 qui permet de déplacer la porte 46 entre ses positions ouverte et fermée,
- un écran 58, et
- des pênes 60 d'une serrure électrique.

Chacun de ces pênes 60 est déplaçable entre une position sortie et une position rentrée. Dans la position sortie, chaque pêne 60 est reçu dans une cavité correspondante aménagée dans un dormant ou un châssis 62 fixé sans aucun degré de liberté sur le dormant, pour verrouiller la porte 46 dans sa position fermée. Dans sa position rentrée, chaque pêne 60 est enfoncé à l'intérieur du boîtier 54 et situé en dehors de la cavité aménagée dans le dormant 62. Ainsi, lorsque tous les pênes sont dans leur position rentrée, la porte 46 peut librement être déplacée de sa position fermée vers sa position ouverte.

Sur la figure 2, quatre pênes 60 sont représentés dans leurs positions sorties pour les rendre plus visibles même si la porte 46 est dans sa position ouverte. Par exemple, chaque pêne 60 est un barreau cylindrique déplaçable en translation entre ses positions sortie et rentrée.

La figure 3 représente l'architecture du bandeau 52. Le bandeau 52 comporte les composants suivants :
- un équipement intérieur 70 d'interphonie de l'interphone,
- une serrure électrique 72,
- une source 76 d'alimentation électrique du bandeau 52, et
- les différents raccordements entre ces composants du bandeau 52.

L'équipement intérieur 70 d'interphonie permet à un résident, situé à l'intérieur de l'appartement 6, d'ouvrir, s'il le souhaite, à un visiteur présent devant la platine 16. A cet effet, l'équipement intérieur 70 d'interphonie comporte :
- l'écran 58,
- un microphone 78 et un haut-parleur 80 pour discuter avec le visiteur présent devant la platine 16,
- des boutons 82 et 84 distincts et actionnables par le résident situé à l'intérieur de l'appartement 6,
- une unité électronique 86 de commande, et
- une émetteur-récepteur 88 qui raccorde l'équipement intérieur 70 d'interphonie au réseau 14.

L'écran 58 affiche les images filmées par la caméra 30 dans une zone 90 d'affichage en réponse à la réception d'un appel de la platine 16. Dans ce mode de réalisation, l'écran 58 est un écran tactile.

Lorsqu'il est actionné, le bouton 82 permet d'activer la conversation audiophonique avec le visiteur. Lorsque la conversation audiophonique est active, les sons captés par les microphones 28 et 78 sont joués par les haut-parleurs, respectivement, 80 et 26.

Le bouton 84 est un bouton d'ouverture. Lorsque le bouton 84 est actionné par le résident, il déclenche l'envoi de la commande de déverrouillage à la serrure 40 par l'intermédiaire de la platine 16.

Ici, les boutons 82 et 84 correspondent chacun à une zone tactile respective de l'écran 58. Ces deux zones tactiles sont situées en-dehors de la zone 90 d'affichage pour permettre l'affichage simultané des images filmées par la caméra 30 et des boutons 82 et 84.

L'unité 86 est configurée pour commander les différents composants de l'équipement intérieur 70 d'interphonie afin de remplir les fonctions d'uninterphone. A cet effet, l'unité 86 comporte :
- une mémoire 92, et
- un microprocesseur programmable 94 apte à exécuter des instructions enregistrées dans la mémoire 92.

La mémoire 92 comporte les données et les instructions nécessaires à l'exécution du procédé de la figure 4.

La serrure 72 est déplaçable, en réponse à l'actionnement d'un bouton 100 d'ouverture par un résident situé à l'intérieur de l'appartement 6, entre un état verrouillé et un état déverrouillé. Dans l'état verrouillé, elle verrouille la porte 46 dans sa position fermée. Dans l'état déverrouillé, elle autorise le déplacement de cette porte 46 depuis sa position fermée vers sa position ouverte. Pour cela, la serrure 72 comporte les pênes 60 et un actionneur électrique 102. L'actionneur 102 est apte, en réponse à une commande de déverrouillage, à déplacer les pênes 60 de leurs positions sorties vers leurs positions rentrées. Pour simplifier la figure 3, seul un pêne 60 de la serrure 72 a été représenté.

Ici, en réponse à l'actionnement du bouton 100, l'unité 86 génère la commande de déverrouillage qui est transmise à l'actionneur 102 de la serrure 72. Dans ce mode de réalisation, le bouton 100 correspond à une zone tactile respective de l'écran 58. De préférence, il est affiché en permanence sur l'écran 58.

L'actionneur 102 est raccordé à l'unité 86 pour être commandé par la même unité 86 de commande que celle qui commande les différents composants de l'équipement intérieur 70 d'interphonie. Par exemple, l'actionneur 102 est un moteur électrique. Ici, l'unité 86 est raccordée à l'actionneur 102 par des liaisons filaires.

La source 76 est apte à alimenter en électricité chacun des composants du bandeau 52. A cet effet, elle comporte une interface 103 de raccordement du bandeau 52 à un réseau extérieur 104 de distribution d'électricité par l'intermédiaire d'une liaison filaire 106. Typiquement, le réseau 104 est un réseau public de distribution d'électricité sous forme de tension alternative.

La source 76 comporte également une batterie 108 de sauvegarde apte à alimenter le bandeau 52 en cas de coupure de la distribution d'électricité par le réseau 104. La batterie 108 peut être un batterie rechargeable ou non. La capacité de la batterie 108 est suffisante pour permettre un fonctionnement normal de la serrure 72, en absence d'alimentation du bandeau 52 par l'intermédiaire du réseau 104, pendant au moins 2 h, et de préférence pendant au moins 6 h ou 12 h.

Le fonctionnement du système 2 va maintenant être décrit en référence au procédé de la figure 4 dans le cas particulier où un contrôle parental est mis en œuvre.

Initialement, lors d'une phase 120, le système 2 est installé dans la résidence 4. Lors de cette phase 120, les portes 12 et 46 à 49 sont installées dans la résidence 4 par un serrurier. Ce même serrurier ou un autre installe également la serrure 40 et la platine 16 et raccorde la platine 16 au réseau 14.

Lors d'une opération 122, ce même serrurier ou un autre fixe un bandeau électronique de porte sur la face intérieure de chacune des portes 46 à 49 et raccorde chacun de ces bandeaux au réseau 14. Typiquement, lors de l'opération 122, le bandeau 52 est fixé, à l'aide de vis, sur la face intérieure 50 de la porte 46. Ainsi, en une seule opération, le serrurier installe dans l'appartement 6 à la fois l'équipement intérieur 70 d'interphonie et la serrure 72. De plus, il n'a pas à raccorder entre-eux l'équipement intérieur 70 d'interphonie et la serrure 72 car le bandeau 52 est pré-câblé.

Une fois le système 2 installé, le système 2 est utilisé par les résidents. Cette utilisation du système 2 est décrite par la suite dans le cas particulier du bandeau 52. Toutefois, tout ce qui est décrit dans ce cas particulier s'applique aux autres bandeaux installés sur les autres portes d'appartement de la résidence 4.

Ici, l'utilisation du système 2 débute par une étape 132 lors de laquelle un administrateur du bandeau 52 active le contrôle parental. Pour cela, typiquement, il saisit, par exemple par l'intermédiaire de l'écran 58, un code parental et l'unité 86 acquière ce code parental et l'enregistre dans sa mémoire 92. Le code parental est typiquement une suite de plusieurs caractères alphanumériques. Par exemple, il s'agit d'un code à quatre chiffres. Par la suite ce code parental pré-enregistré dans la mémoire 92 est appelé « code parental correct ». Enfin, l'administrateur active le contrôle parental et cette commande d'activation est acquise par l'unité 86. Par exemple, dans cet exemple de réalisation, le contrôle parental est activé dès qu'un code parental correct est enregistré dans la mémoire 92. Dans ce cas, le contrôle parental peut être désactivé par l'administrateur en effaçant le code parental correct de la mémoire 92.

Ensuite, l'utilisation du système 2 se décompose principalement en une phase 134 de déverrouillage de la serrure 40 et en une phase 136 de déverrouillage de la serrure 72.

Au début de la phase 134, un visiteur se présente devant la platine 16 et utilise l'interface 24 pour sélectionner et appeler l'appartement 6. Lors d'une étape 140, cet appel est transmis à l'équipement intérieur 70 d'interphonie par l'intermédiaire du réseau 14.

En réponse à la réception de cet appel, lors d'une étape 142, l'unité 86 commande le haut-parleur 80 pour jouer une sonnerie pré-enregistrée dans la mémoire 92. En parallèle, lors d'une étape 144, la caméra 30 filme le visiteur et la platine 16 transmet les images filmées à l'unité 86 qui commande alors l'écran 58 pour les afficher dans la zone 90.

Le résident situé à l'intérieur de l'appartement 6 se place devant l'écran 58 et regarde les images affichées.

S'il décide d'établir une conversation audiophonique avec le visiteur, lors d'une étape 146, il appuie sur le bouton 82.

Lors d'une étape 148, l'unité 86 détecte que le bouton 86 a été actionné et, en réponse, active la conversation audiophonique. Dès lors, le résident peut discuter avec le visiteur par l'intermédiaire des microphones 28 et 78 et des haut-parleurs 26 et 80.

En parallèle, lors d'une étape 150, l'unité 86 surveille si le bouton 84 est actionné par le résident.

Seulement en réponse à la détection que le bouton 84 est actionné, une étape 151 de contrôle parental est exécutée.

L'étape 151 débute par une opération 152 lors de laquelle l'unité 86 commande l'écran 58 pour demander au résident de saisir un code parental, par exemple, par l'intermédiaire d'un clavier affiché sur l'écran 58.

Ensuite, lors d'une opération 154, l'unité 86 acquière le code parental saisi et le compare au code parental correct pré-enregistré.

Uniquement si le code parental saisi est identique au code parental correct, alors le contrôle parental a réussi et le procédé se poursuit pas une étape 156 de déverrouillage. Dans le cas contraire, le contrôle parental a échoué. Par exemple, si le contrôle parental est un échec, le procédé retourne à l'opération 152.

Lors de l'étape 156 de déverrouillage, l'unité 86 envoie une commande de déverrouillage à la serrure 40. Ici, cette commande de déverrouillage est transmise, par l'intermédiaire de l'émetteur-récepteur 88 et du réseau 14, à la platine 16 qui, en réponse, la retransmet à la serrure 40.

En réponse à la réception de cette commande de déverrouillage, lors d'une étape 158, la serrure 40 se déplace vers son état déverrouillé.

Le visiteur peut alors déplacer la porte 12 dans sa position ouverte et entrer à l'intérieur de la résidence 4 puis se déplacer jusqu'à se présenter devant la porte 46 de l'appartement 6. Par exemple, pour signaler sa présence devant la porte 46, le visiteur enfonce une sonnette ou tape à la porte.

A ce stade, le procédé se poursuit généralement par la phase 136. Toutefois, la phase 136 est aussi directement exécutée, sans au préalable exécuter la phase 134, à chaque fois qu'un résident souhaite déverrouiller la serrure 72, par exemple, pour sortir de l'appartement 6.

Si le résident souhaite déverrouiller la serrure 72 pour laisser entrer le visiteur ou pour sortir, il actionne le bouton 100.

Lors d'une étape 170, l'unité 86 détecte l'actionnement du bouton 100 et, en réponse, vérifie si un code parental correct a été saisi récemment. Typiquement, pour cela, l'unité 86 vérifie, lors de l'étape 170, si un code parental correct a été saisi dans un intervalle de temps [tₑ ; tₑ-D], où :
- tₑ est l'instant où l'unité 86 a détecté l'enfoncement du bouton 100, et
- D est une durée pré-enregistrée dans la mémoire 92.

La durée D est choisie égale ou plus grande qu'une durée Dn, où la durée Dn est égale à la durée nécessaire pour qu'un visiteur se déplace tranquillement depuis la porte 12 jusqu'à la porte 46. A l'inverse, elle est aussi choisie suffisamment courte pour exiger une nouvelle saisie du code parental si la durée qui s'écoule entre l'actionnement du bouton 84 puis du bouton 100 est très supérieure à la durée Dn. Par exemple, la durée D est choisie entre 3 min et 25 min et, de préférence, entre 5 min et 15 min. Ici, la durée D est égale à 10 min.

Lorsque l'unité 86 détermine qu'un code correct a été saisi récemment, le procédé se poursuite directement par une étape 172 de déverrouillage. Dans le cas contraire, le procédé se poursuit par une étape 174 de contrôle parental.

Lors de l'étape 172, l'unité 86 envoie une commande de déverrouillage à la serrure 72.

En réponse à la réception de cette commande de déverrouillage, lors d'une étape 176, la serrure 72 se déplace vers son état déverrouillé. La porte 46 peut alors être déplacée, par le visiteur ou le résident, depuis sa position fermée jusqu'à sa position ouverte.

L'étape 174 est par exemple identique à l'étape 151. L'étape 174 se poursuit par l'étape 172 uniquement si le contrôle parental a réussi.

Dans le cas où le contrôle parental n'est pas activé, les étapes 151, 170 et 174 de contrôle parental sont inhibées. Ainsi, dans ce cas, il est procédé directement à l'étape 156 ou à l'étape 172 de déverrouillage sans effectuer de contrôle parental.

### CHAPITRE II : VARIANTES

### Variantes du bandeau de porte :

En variante, l'écran 58 n'est pas un écran tactile. Dans ce cas, les boutons 82, 84 et 100 sont des boutons poussoirs mécaniques dont les poussoirs font saillis à l'extérieur du boîtier 54.

Quelle que soit le bouton du système 2, celui-ci peut être implémenté sous la forme d'une commande vocale. Par exemple, dans le cas des boutons 82, 84 et 100, les commandes vocales sont acquises, par exemple, par le microphone 78. Ainsi, à titre d'illustration, la commande vocale « Déverrouiller la porte d'entrée » déclenche le déverrouillage de la porte 12 et la commande vocale « Dialoguer avec la porte d'entrée » déclenche l'établissement de la communication audiophonique avec la personne présente devant la porte 12. La commande vocale « Déverrouiller la porte pallière » déclenche le déverrouillage de la porte 46. Quel que soit le mode d'implémentation choisi pour un bouton, dans ce texte, celui-ci est couvert par le terme « bouton » ou « touche ». Dans tous les modes d'implémentation possibles, un tel bouton est un élément d'interface homme-machine.

Le bouton 82 pour activer la conversation téléphonique peut être omis. Dans ce cas, par exemple, la conversation audiophonique est systématiquement activée dès que l'équipement intérieur 70 d'interphonie reçoit un appel de la platine 16.

Le bouton 100 n'est pas nécessairement affiché sur l'écran 58 simultanément avec les boutons 82 et 84. En variante, le bouton 100 est affiché en permanence et la zone 90 et les boutons 82 et 84 sont affichés uniquement lorsque le bandeau 52 a reçu un appel de la platine 16.

La serrure électrique 72 peut comporter un nombre quelconque de pênes. En particulier, la serrure 72 peut comporter, en variante, un seul pêne.

Dans une variante simplifiée, la source 76 d'alimentation du bandeau 52 comporte seulement la batterie 108. Dans ce cas, le bandeau 52 n'est pas alimenté directement par le réseau électrique 104. Dans une autre variante, le source 76 d'alimentation comporte seulement l'interface 103. Dans ce cas, le bandeau 52 doit nécessairement être raccordé au réseau 104 pour fonctionner.

Le bandeau 52 peut comporter d'autres composants supplémentaires. Par exemple, le bandeau 52 peut comporter un dispositif de secours qui permet de déplacer la serrure électrique 72 vers son état déverrouillé à l'aide d'une clé mécanique même en cas de défaillance de l'actionneur 102. Un exemple d'un tel dispositif de secours est décrit dans la demande déposée sous le numéro FR2203725 le 21 avril 2022 par la société COGELEC. Dans ce dernier cas, le bandeau de porte peut en plus comporter un dispositif de blocage capable d'interdire le déplacement de la serrure 72 vers son état déverrouillé à l'aide de la clé mécanique tout en laissant possible le déplacement de cette serrure 72 vers son état déverrouillé à l'aide de l'actionneur 102. Des exemples de réalisation de tels dispositifs de blocage sont décrits dans la demande déposée sous le numéro FR2203726 le 21 avril 2022 par la société COGELEC.

Le bandeau 52 peut également comporter en plus un émetteur-récepteur qui le raccorde à un terminal mobile distant par l'intermédiaire d'un réseau public de transmission d'informations. Ce terminal mobile distant est typiquement un smartphone ou un ordinateur portable sur lequel est exécuté une application qui permet de commander à distance le bandeau 52. Par exemple, le terminal mobile peut ainsi déclencher à distance le déverrouillage de la serrure 40 et de la serrure 72. Dans ce dernier cas, les boutons 84 et 100 ne sont pas utilisés pour cela.

Dans un cas très simplifié, la résidence comporte un seul appartement.

Dans une autre variante, seule un partie des portes d'appartement de la résidence 4 est équipée du bandeau électronique de porte. Dans un cas extrême, une seule des portes d'appartement est équipée du bandeau électronique de porte. Dans ce cas, par exemple, les autres appartements sont chacun équipés d'un équipement intérieur d'interphonie qui n'est pas nécessairement fixé sur la porte d'appartement et qui n'est pas nécessairement interfacé avec une serrure électrique de la porte d'appartement. De plus, les serrures de ces autres appartements ne sont pas nécessairement des serrures électriques qui peuvent être déverrouillées depuis l'intérieur par simple enfoncement d'un bouton. Par exemple, les serrures montées sur les portes de ces autres appartements sont de simples serrures mécaniques conventionnelles et non pas des serrures électriques.

### Variantes du contrôle parental :

D'autres modes de réalisation du contrôle parental sont possibles. Par exemple, en variante, l'étape 170 de vérification qu'un code parental correct a été saisi récemment est omise. Dans ce cas, l'étape 174 de contrôle parental est systématiquement exécutée dès que le bouton 100 est actionné.

Dans une variante simplifiée, seule l'étape 151 ou seules les étapes 170 et 174 sont omises. Dans ce cas, l'étape de contrôle parental est exécutée soit uniquement en réponse à l'actionnement du bouton 84 soit uniquement en réponse à l'actionnement du bouton 100. Dans une variante encore plus simplifiée, le contrôle parental est omis. Dans ce cas, le déplacement des serrures 40 et 72 n'est pas conditionné à la saisie d'un code parental correct. Les étapes 132, 151, 170 et 174 sont donc omises.

Le contrôle parental peut être activé et, en alternance, désactivé de différentes manières. Par exemple, en variante, c'est la saisie d'un code secret particulier par l'administrateur qui permet d'activer et, en alternance, de désactiver le contrôle parental.

### Autres variantes :

D'autres modes de réalisation de la platine de rue sont possibles. Par exemple, en variante, l'interface homme-machine qui permet d'appeler un appartement comporte un bouton d'appel par appartement.

Dans une variante simplifiée, le lecteur 32 de badges est omis ou installé ailleurs que dans la platine 16. Le lecteur 32 de badges peut être complété ou remplacé par d'autres moyens pour déclencher l'envoi de la commande de déverrouillage vers la serrure 40 sans utiliser pour cela l'un des équipements intérieurs 70 d'interphonie. Par exemple, ces autres moyens peuvent prendre la forme d'un clavier pour saisir un code d'accès, d'un lecteur d'empreintes digitales.

La caméra 30 peut aussi être omise. Dans ce cas, les équipements intérieurs d'interphonie n'affichent pas l'image du visiteur et seule la conversation audiophonique permet au résident d'identifier le visiteur.

Dans une autre variante, la commande de déverrouillage est transmise à la serrure 40 sans passer par l'intermédiaire de la platine 16.

Le fait que l'envoi d'une commande de déverrouillage soit conditionné à la saisi d'un code parental correct peut aussi être mis en œuvre dans un bandeau électronique de porte qui ne comporte pas l'équipement intérieur 70 d'interphonie. Cela peut aussi être mis en œuvre dans un équipement intérieur d'interphonie qui n'est pas intégré dans un bandeau de porte et qui, par exemple, comporte sa propre unité de commande indépendante de l'unité de commande intégrée dans le bandeau de porte. Dans ce cas, cet équipement intérieur d'interphonie peut être utilisé y compris dans les appartements dépourvus de bandeaux de porte électronique.

### CHAPITRE III : AVANTAGES DES MODES DE RÉALISATION DÉCRITS

Le faite que l'équipement intérieur 70 d'interphonie, la serrure électrique 72 et le bouton 100 soient tous intégrés dans un même bandeau de porte, simplifie considérablement l'installation des systèmes permettant à la fois le déverrouillage de la porte de résidence et de la porte d'appartement. En effet, dans ce cas, pour équiper un appartement, il suffit de fixer le bandeau électronique de porte sur la face intérieure de la porte d'appartement. L'installateur n'a pas à se soucier de comment il va faire pour interfacer l'équipement intérieur d'interphonie et l'unité de commande. Il n'a pas non plus à se soucier de comment il va faire pour interfacer la serrure électrique et l'unité de commande. Tout est pré-raccordé à l'intérieur du même bandeau électronique de porte. De plus, l'unité 86 de commande est commune à l'équipement intérieur 70 d'interphonie et à la serrure électrique 72. Cela simplifie la réalisation du système de contrôle d'accès car il n'est alors plus nécessaire d'avoir une unité de commande spécifique pour la serrure 72 et une autre unité de commande spécifique pour l'équipement intérieur 70 d'interphonie. De plus, les boutons 84 et 100 sont situés au même emplacement à l'intérieur de l'appartement, ce qui évite au résident d'avoir à se déplacer entre le bouton 84 situé sur un équipement intérieur d'interphonie éloigné de la porte d'appartement et le bouton 100 situé à proximité de la porte d'appartement.

Le fait que les boutons 84 et 100 soient réalisés à l'aide du même écran tactile 58 simplifie la réalisation du système de contrôle d'accès car le même écran est alors utilisé pour commander la serrure 72 et l'équipement intérieur 70 d'interphonie.

Le fait que le bandeau de porte intègre aussi les pênes 60 de la serrure électrique simplifie encore plus l'installation du système de contrôle d'accès.

L'implémentation dans l'unité 86 de commande d'une étape de contrôle parental empêche qu'une personne non-autorisée à déverrouiller une porte, tel qu'un enfant, puisse déverrouiller cette porte. A l'inverse, cette étape de contrôle parental n'empêche pas d'autres personnes de déverrouiller la porte 12 ou 46 à l'aide du bandeau 52.

Le fait d'inhiber l'étape 174 de contrôle parental si un code parental correct a déjà récemment été saisi permet de ne pas avoir à saisir à nouveau ce code parental pour ouvrir la porte d'appartement à un visiteur dont on vient juste d'autoriser l'entrer à l'intérieur de la résidence 4 en saisissant une code parental correct.

## Revendications

1. Système de contrôle d'accès apte à contrôler l'accès à une résidence comportant plusieurs appartements, ce système comportant :
- pour chaque appartement de la résidence, une porte (46-49) d'appartement située à l'entrée de cet appartement, cette porte d'appartement étant déplaçable entre une position fermée où elle interdit l'accès à l'intérieur de cet appartement et une position ouverte où elle autorise l'accès à l'intérieur de cet appartement,
- pour au moins l'un des appartements de la résidence :
- une première serrure électrique (72) montée sur la porte d'appartement de cet appartement, cette première serrure électrique étant déplaçable, en réponse à une première commande de déverrouillage, entre un état verrouillé dans lequel elle verrouille cette porte d'appartement dans sa position fermée et un état déverrouillé dans lequel elle autorise le déplacement de cette porte d'appartement depuis sa position fermée vers sa position ouverte,
- un premier bouton (100) d'ouverture apte à être actionné par un résident situé à l'intérieur de cet appartement,
- une porte (12) de résidence déplaçable entre une position fermée où elle interdit l'accès à l'intérieur de la résidence et une position ouverte où elle autorise l'accès à l'intérieur de la résidence,
- une seconde serrure électrique (40) mécaniquement associé à la porte de résidence et déplaçable, en réponse à une seconde commande de déverrouillage, entre un état verrouillé dans lequel elle verrouille la porte de résidence dans sa position fermée et un état déverrouillé dans lequel elle autorise le déplacement de la porte de résidence depuis sa position fermée vers sa position ouverte,
- une platine (16) de rue accessible depuis l'extérieur de la résidence, cette platine de rue comportant :
- une caméra (30) apte à filmer un visiteur présent devant cette platine de rue,
- un microphone (28) et un haut parleur (26) pour discuter avec un résident d'un appartement de la résidence,
- une interface homme-machine (24) permettant au visiteur d'appeler l'un quelconque des équipements intérieurs d'interphonie situés chacun à l'intérieur d'un appartement respectif de la résidence,
- pour chaque appartement de la résidence, un équipement intérieur d'interphonie respectif situé à l'intérieur de cet appartement, chaque équipement intérieur d'interphonie comportant :
- un écran (58) apte à afficher les images filmées par la caméra de la platine de rue,
- un microphone (78) et un haut-parleur (80) pour discuter avec le visiteur présent devant la platine de rue,
- un second bouton (84) d'ouverture apte à être actionné par le résident situé à l'intérieur de cet appartement pour déclencher l'envoi de la seconde commande de déverrouillage à la seconde serrure électrique,
**caractérisé en ce que** le système de contrôle d'accès comporte, pour ledit au moins appartement, :
- une unité (86) de commande apte :
- à envoyer la première commande de déverrouillage à la première serrure électrique en réponse à l'actionnement du premier bouton d'ouverture, et
- à envoyer la seconde commande de déverrouillage à la seconde serrure électrique en réponse à l'actionnement du second bouton d'ouverture,
- un bandeau électronique (52) de porte fixé sur la face intérieure (50) de la porte d'appartement de cet appartement, ce bandeau électronique de porte se présentant sous la forme d'une seule pièce comportant l'ensemble des composants suivants : la première serrure électrique (72), le premier bouton d'ouverture (100), l'équipement intérieur (70) d'interphonie de cet appartement, l'unité (86) de commande et les raccordements entre tous les composants du bandeau électronique de porte.

2. Bandeau électronique de porte pour la réalisation d'un système conforme à la revendication 1, ce bandeau électronique de porte étant apte à être fixé sur la face intérieure d'une porte d'appartement d'un appartement, ce bandeau électronique de porte se présentant sous la forme d'une seule pièce comportant l'ensemble des composants suivants :
- une première serrure électrique (72) déplaçable, en réponse à une première commande de déverrouillage, entre un état verrouillé dans lequel elle verrouille la porte d'appartement dans une position fermée et un état déverrouillé dans lequel elle autorise le déplacement de cette porte d'appartement depuis sa position fermée vers une position ouverte,
- un premier bouton (100) d'ouverture apte à être actionné par un résident situé à l'intérieur de cet appartement,
**caractérisé en ce que** le bandeau électronique de porte comporte en plus les composants suivants :
- un équipement intérieur (70) d'interphonie comportant :
- un écran (58) apte à afficher des images filmées par une caméra d'une platine de rue accessible depuis l'extérieur de la résidence,
- un microphone (78) et un haut-parleur (80) pour discuter avec un visiteur présent devant la platine de rue,
- un second bouton (84) d'ouverture apte à être actionné par le résident situé à l'intérieur de cet appartement pour déclencher l'envoi d'une seconde commande de déverrouillage à une seconde serrure électrique mécaniquement associée à une porte de résidence,
- une unité (86) de commande apte :
- à envoyer la première commande de déverrouillage à la première serrure électrique en réponse à l'actionnement du premier bouton d'ouverture, et
- à envoyer la seconde commande de déverrouillage à la seconde serrure électrique en réponse à l'actionnement du second bouton d'ouverture,
- les raccordements entre tous ces composants du bandeau électronique de porte.

3. Système selon la revendication 1 ou bandeau électronique de porte selon la revendication 2, dans lequel l'écran (58) de l'équipement intérieur d'interphonie est un écran tactile et les premier et second boutons (84, 100) d'ouverture correspondent chacun à une zone tactile respective de ce même écran tactile.

4. Système selon l'une quelconque des revendications 1 et 3 ou bandeau électronique de porte selon l'une quelconque des revendications 2 à 3, dans lequel la première serrure comporte au moins un pêne (60) déplaçable entre une position saillante dans laquelle il coopère avec un logement solidaire du dormant de la porte d'appartement pour maintenir cette porte d'appartement dans sa position fermée, et une position rétractée dans laquelle il autorise le déplacement de la porte d'appartement de sa position fermée vers sa position ouverte.

5. Système ou bandeau électronique de porte selon la revendication 4, dans lequel la première serrure comporte plusieurs desdits pênes (60) déplaçables entre une position saillante et une position rétractée.

6. Système selon l'une quelconque des revendications 1 et 3 à 5 ou bandeau électronique de porte selon l'une quelconque des revendications 2 à 5, dans lequel le bandeau de porte comporte un boîtier (54) apte à être rapporté, sans aucun degré de liberté, sur la face intérieure de la porte d'appartement, la première serrure, le premier bouton d'ouverture, l'équipement intérieur d'interphonie et l'unité de commande étant fixés, sans aucun degré de liberté, à l'intérieur de ce boîtier.

7. Système selon l'une quelconque des revendications 1 et 3 à 6 ou bandeau électronique de porte selon l'une quelconque des revendications 2 à 6, dans lequel l'unité (86) de commande est configurée pour :
- en réponse à l'actionnement du premier ou du second bouton d'ouverture, procéder à une étape de contrôle parental lors de laquelle il commande l'écran (58) pour demander la saisie d'un code parental, puis compare le code parental saisi à un code parental correct pré-enregistré, puis
- lorsque le code parental saisi correspond au code parental correct pré-enregistré, envoyer la commande de déverrouillage correspondant au bouton d'ouverture actionné et, dans le cas contraire, inhiber la transmission de la commande de déverrouillage correspondant au bouton d'ouverture actionné.

8. Système ou bandeau électronique de porte selon la revendication 7, dans lequel l'unité (86) de commande est configurée pour :
- en réponse à l'actionnement du premier bouton (100) d'ouverture, vérifier si un code parental correct a préalablement été saisi dans un intervalle de temps [tₑ ; tₑ-D], où :
- tₑ est l'instant où l'unité de commande a détecté l'actionnement du premier bouton d'ouverture,
- D est une durée prédéterminée, et
- seulement si un code parental correct a été saisi dans l'intervalle de temps [tₑ ; tₑ-D], inhiber l'exécution de l'étape de contrôle parental et envoyer la première commande de déverrouillage sans exécuter l'étape de contrôle parental.

## Patentansprüche

1. Zugangskontrollsystem zur Steuerung des Zugangs zu einem Wohngebäude mit mehreren Wohnungen, wobei dieses System umfasst:
- für jede Wohnung des Wohngebäudes eine Wohnungstür (46-49), die sich am Eingang dieser Wohnung befindet, wobei diese Wohnungstür zwischen einer geschlossenen Position, in der sie den Zugang zum Inneren dieser Wohnung verhindert, und einer offenen Position, in der sie den Zugang zum Inneren dieser Wohnung ermöglicht, bewegbar ist,
- für mindestens eine der Wohnungen des Wohnkomplexes:
- ein erstes elektrisches Schloss (72), das an der Wohnungstür dieser Wohnung angebracht ist, wobei dieses erste elektrische Schloss als Reaktion auf einen ersten Entriegelungsbefehl zwischen einem verriegelten Zustand, in dem es diese Wohnungstür in ihrer geschlossenen Position verriegelt, und einem entriegelten Zustand, in dem es die Bewegung dieser Wohnungstür von ihrer geschlossenen Position in ihre geöffnete Position ermöglicht, bewegbar ist,
- einen ersten Öffnungsknopf (100), der von einem Bewohner im Inneren dieser Wohnung betätigt werden kann,
- eine Wohnungstür (12), die zwischen einer geschlossenen Position, in der sie den Zugang zum Inneren der Wohnung verhindert, und einer offenen Position, in der sie den Zugang zum Inneren der Wohnung ermöglicht, bewegbar ist,
- ein zweites elektrisches Schloss (40), das mechanisch mit der Wohnungstür verbunden ist und als Reaktion auf einen zweiten Entriegelungsbefehl zwischen einem verriegelten Zustand, in dem es die Wohnungstür in ihrer geschlossenen Position verriegelt, und einem entriegelten Zustand, in dem es die Bewegung der Wohnungstür von ihrer geschlossenen Position in ihre geöffnete Position ermöglicht, bewegbar ist,
- eine von außerhalb der Wohnanlage zugängliche Außenstation (16), wobei diese Außenstation umfasst:
- eine Kamera (30), die in der Lage ist, einen vor dieser Außenstation anwesenden Besucher zu filmen,
- ein Mikrofon (28) und einen Lautsprecher (26) zur Kommunikation mit einem Bewohner einer Wohnung der Wohnanlage,
- eine Mensch-Maschine-Schnittstelle (24), die es dem Besucher ermöglicht, eine beliebige der Innen-Sprechanlagen anzurufen, die sich jeweils im Inneren einer entsprechenden Wohnung der Wohnanlage befinden,
- für jede Wohnung der Wohnanlage eine jeweilige Innen-Sprechanlage, die sich im Inneren dieser Wohnung befindet, wobei jede Innen-Sprechanlage umfasst:
- einen Bildschirm (58), der die von der Kamera der Außenstation aufgenommenen Bilder anzeigen kann,
- ein Mikrofon (78) und einen Lautsprecher (80) zum Gespräch mit dem vor der Außenstation befindlichen Besucher,
- eine zweite Öffnungstaste (84), die von dem Bewohner innerhalb dieser Wohnung betätigt werden kann, um die Übertragung des zweiten Entriegelungsbefehls an das zweite elektrische Schloss auszulösen,
**dadurch gekennzeichnet, dass** das Zugangskontrollsystem für die genannte mindestens eine Wohnung umfasst:
- eine Steuereinheit (86), die in der Lage ist:
- als Reaktion auf die Betätigung des ersten Öffnungsknopfes den ersten Entriegelungsbefehl an das erste elektrische Schloss zu senden, und
- als Reaktion auf die Betätigung des zweiten Öffnungsknopfes den zweiten Entriegelungsbefehl an das zweite elektrische Schloss zu senden,
- eine elektronische Türblende (52), die an der Innenseite (50) der Wohnungstür dieser Wohnung befestigt ist, wobei diese elektronische Türblende als ein einziges Bauteil ausgebildet ist, das alle folgenden Komponenten umfasst: das erste elektrische Schloss (72), den ersten Öffnungsknopf (100), die Innenausstattung (70) der Gegensprechanlage dieser Wohnung, die Steuereinheit (86) und die Verbindungen zwischen allen Komponenten der elektronischen Türblende.

2. Elektronische Türblende zur Realisierung eines Systems gemäß Anspruch 1, wobei diese elektronische Türblende an der Innenseite einer Wohnungstür einer Wohnung befestigt werden kann und sich in Form eines einzigen Bauteils darstellt, das alle folgenden Komponenten umfasst:
- ein erstes elektrisches Schloss (72), das als Reaktion auf einen ersten Entriegelungsbefehl zwischen einem verriegelten Zustand, in dem es die Wohnungstür in einer geschlossenen Position verriegelt, und einem entriegelten Zustand, in dem es die Bewegung dieser Wohnungstür aus ihrer geschlossenen Position in eine geöffnete Position ermöglicht, bewegbar ist,
- einen ersten Öffnungsknopf (100), der von einem Bewohner innerhalb dieser Wohnung betätigt werden kann,
**dadurch gekennzeichnet, dass** die elektronische Türleiste zusätzlich die folgenden Komponenten umfasst:
- eine Innen-Sprechanlage (70) mit:
- ein Display (58), das Bilder anzeigen kann, die von einer Kamera einer von außerhalb der Wohnanlage zugänglichen Außenstation aufgenommen wurden,
- ein Mikrofon (78) und einen Lautsprecher (80) zum Gespräch mit einem Besucher, der sich vor der Türsprechanlage befindet,
- eine zweite Öffnungstaste (84), die von dem Bewohner im Inneren dieser Wohnung betätigt werden kann, um die Übermittlung eines zweiten Entriegelungsbefehls an ein zweites elektrisches Schloss auszulösen, das mechanisch mit einer Wohnungstür verbunden ist,
- eine Steuereinheit (86), die in der Lage ist:
- als Reaktion auf die Betätigung des ersten Öffnungsknopfes den ersten Entriegelungsbefehl an das erste elektrische Schloss zu senden, und
- als Reaktion auf die Betätigung des zweiten Öffnungsknopfes den zweiten Entriegelungsbefehl an das zweite elektrische Schloss zu senden,
- die Verbindungen zwischen all diesen Komponenten der elektronischen Türblende.

3. System nach Anspruch 1 oder elektronische Türleiste nach Anspruch 2, wobei der Bildschirm (58) der Innenausstattung der Gegensprechanlage ein Touchscreen ist und die erste und zweite Öffnungstaste (84, 100) jeweils einem entsprechenden Touch-Bereich desselben Touchscreens entsprechen.

4. System nach einem der Ansprüche 1 und 3 oder elektronische Türblende nach einem der Ansprüche 2 bis 3, wobei das erste Schloss mindestens einen Riegel (60) aufweist, der zwischen einer vorstehenden Position, in der er mit einer fest mit dem Türrahmen der Wohnungstür verbundenen Aufnahme zusammenwirkt, um diese Wohnungstür in ihrer geschlossenen Position zu halten, und einer zurückgezogenen Position, in der er die Bewegung der Wohnungstür aus ihrer geschlossenen Position in ihre geöffnete Position ermöglicht.

5. System oder elektronische Türleiste gemäß Anspruch 4, wobei das erste Schloss mehrere der genannten Riegel (60) aufweist, die zwischen einer vorstehenden Position und einer zurückgezogenen Position bewegbar sind.

6. System gemäß einem der Ansprüche 1 und 3 bis 5 oder elektronische Türblende gemäß einem der Ansprüche 2 bis 5, wobei die Türblende ein Gehäuse (54) aufweist, das ohne jeglichen Freiheitsgrad an der Innenseite der Wohnungstür anbringbar ist, wobei das erste Schloss, der erste Öffnungsknopf, die Innen-Sprechanlage und die Steuereinheit ohne jeglichen Bewegungsspielraum im Inneren dieses Gehäuses befestigt sind.

7. System gemäß einem der Ansprüche 1 und 3 bis 6 oder elektronische Türblende gemäß einem der Ansprüche 2 bis 6, wobei die Steuereinheit (86) so konfiguriert ist, dass sie:
- als Reaktion auf die Betätigung der ersten oder der zweiten Öffnungstaste einen Schritt zur elterlichen Kontrolle durchzuführen, bei dem sie den Bildschirm (58) so steuert, dass die Eingabe eines elterlichen Codes angefordert wird, und anschließend den eingegebenen elterlichen Code mit einem zuvor gespeicherten korrekten elterlichen Code vergleicht, und
- wenn der eingegebene Elterncode mit dem vorab gespeicherten korrekten Elterncode übereinstimmt, den der betätigten Öffnungstaste entsprechenden Entriegelungsbefehl zu senden und andernfalls die Übertragung des der betätigten Öffnungstaste entsprechenden Entriegelungsbefehls zu unterbinden.

8. System oder elektronische Türleiste gemäß Anspruch 7, wobei die Steuereinheit (86) so konfiguriert ist, dass sie:
- als Reaktion auf die Betätigung des ersten Öffnungsknopfes (100) zu prüfen, ob zuvor innerhalb eines Zeitintervalls [tₑ ; tₑ -D] ein korrekter Elterncode eingegeben wurde, wobei:
- tₑ der Zeitpunkt ist, zu dem die Steuereinheit die Betätigung der ersten Öffnungstaste erkannt hat,
- D eine vorbestimmte Zeitspanne ist, und
- nur wenn ein korrekter Elterncode im Zeitintervall [tₑ ; tₑ -D] eingegeben wurde, die Ausführung des Schritts zur elterlichen Kontrolle unterbinden und den ersten Entriegelungsbefehl senden, ohne den Schritt zur elterlichen Kontrolle auszuführen.

## Claims

1. An access control system capable of controlling access to a residential building comprising several flats, said system comprising:
- for each flat in the residential building, a flat door (46-49) situated at the entrance to that flat, said flat door being movable between a closed position in which it prevents access to the interior of that flat and an open position in which it permits access to the interior of that flat,
- for at least one of the flats in the building:
- a first electric lock (72) mounted on the apartment door of that apartment, this first electric lock being movable, in response to a first unlocking command, between a locked state in which it locks this apartment door in its closed position and an unlocked state in which it allows this apartment door to move from its closed position to its open position,
- a first opening button (100) capable of being operated by a resident located inside the flat,
- a residential door (12) movable between a closed position, in which it prevents access to the interior of the residence, and an open position, in which it allows access to the interior of the residence,
- a second electric lock (40) mechanically associated with the apartment door and movable, in response to a second unlocking command, between a locked state in which it locks the apartment door in its closed position and an unlocked state in which it permits the movement of the apartment door from its closed position to its open position,
- an external panel (16) accessible from outside the residence, this external panel comprising:
- a camera (30) capable of filming a visitor standing in front of said door station,
- a microphone (28) and a loudspeaker (26) for communicating with a resident of a flat in the residence,
- a human-machine interface (24) enabling the visitor to call any of the indoor intercom units, each located inside a respective flat in the building,
- for each flat in the building, a respective indoor intercom unit located inside that flat, each indoor intercom unit comprising:
- a screen (58) capable of displaying the images filmed by the door station camera,
- a microphone (78) and a loudspeaker (80) for speaking with the visitor standing in front of the door station,
- a second opening button (84) capable of being operated by the resident inside that flat to trigger the transmission of the second unlocking command to the second electric lock,
**characterised in that** the access control system comprises, for said at least one flat:
- a control unit (86) capable of:
- to send the first unlock command to the first electric lock in response to the actuation of the first opening button, and
- to send the second unlock command to the second electric lock in response to the actuation of the second opening button,
- an electronic door panel (52) fixed to the inner face (50) of the flat door of said flat, said electronic door panel taking the form of a single unit comprising all of the following components: the first electric lock (72), the first opening button (100), the internal intercom equipment (70) of said flat, the control unit (86) and the connections between all the components of the electronic door panel.

2. Electronic door panel for implementing a system according to claim 1, said electronic door panel being suitable for mounting on the inner face of an apartment door of an apartment, said electronic door panel being in the form of a single unit comprising all of the following components:
- a first electric lock (72) movable, in response to a first unlocking command, between a locked state in which it locks the apartment door in a closed position and an unlocked state in which it allows the apartment door to move from its closed position to an open position,
- a first opening button (100) capable of being operated by a resident located inside said flat,
**characterised in that** the electronic door panel further comprises the following components:
- an indoor intercom unit (70) comprising:
- a screen (58) capable of displaying images filmed by a camera on an external door panel accessible from outside the residence,
- a microphone (78) and a loudspeaker (80) for communicating with a visitor standing in front of the door station,
- a second opening button (84) capable of being operated by the resident located inside the flat to trigger the transmission of a second unlocking command to a second electric lock mechanically associated with a door of the residence,
- a control unit (86) capable of:
- to send the first unlocking command to the first electric lock in response to the actuation of the first opening button, and
- to send the second unlock command to the second electric lock in response to the second open button being pressed,
- the connections between all these components of the electronic door panel.

3. A system according to claim 1 or an electronic door panel according to claim 2, wherein the screen (58) of the indoor intercom equipment is a touch screen and the first and second opening buttons (84, 100) each correspond to a respective touch area of said touch screen.

4. A system according to any one of claims 1 and 3 or an electronic door panel according to any one of claims 2 to 3, wherein the first lock comprises at least one bolt (60) movable between a protruding position in which it engages with a recess integral with the frame of the apartment door to hold said apartment door in its closed position, and a retracted position in which it allows the apartment door to move from its closed position to its open position.

5. A door system or electronic door strip according to claim 4, wherein the first lock comprises a plurality of said bolts (60) movable between a protruding position and a retracted position.

6. A system according to any one of claims 1 and 3 to 5 or an electronic door panel according to any one of claims 2 to 5, wherein the door panel comprises a housing (54) capable of being mounted, without any degree of freedom, on the inner face of the apartment door, the first lock, the first opening button, the internal intercom equipment and the control unit being fixed, without any degree of freedom, inside this housing.

7. A system according to any one of claims 1 and 3 to 6, or an electronic door panel according to any one of claims 2 to 6, wherein the control unit (86) is configured to:
- in response to the actuation of the first or second opening button, perform a parental control step during which it controls the display (58) to request the entry of a parental code, then compares the entered parental code with a pre-registered correct parental code, and then
- when the entered parental code matches the pre-registered correct parental code, send the unlock command corresponding to the actuated opening button and, otherwise, inhibit the transmission of the unlock command corresponding to the actuated opening button.

8. A system or electronic door panel according to claim 7, wherein the control unit (86) is configured to:
- in response to the actuation of the first opening button (100), checking whether a correct parental code has previously been entered within a time interval [tₑ ; tₑ -D], where:
- tₑ is the time at which the control unit detected the actuation of the first opening button,
- D is a predetermined duration, and
- only if a correct parental code has been entered within the time interval [tₑ ; tₑ -D], inhibit the execution of the parental control step and send the first unlock command without executing the parental control step.
